# EUROPEAN PATENT APPLICATION

(11) **EP 2 253 200 A2**
(43) Date of publication of application: **24.11.2010**
(21) Application number: 10155421.0
(22) Date of filing: 04.03.2010
(51) Int. Cl.: A01G 3/02

(54) **Garden scissors**

(30) Priority: 19.05.2009 TW 098208664
(71) Applicant: Natura Innovation Ltd., Taipei 104 (TW)
(72) Inventor: Shan, Su-Hua, 104, Taipei (TW)
(74) Representative: Dossmann, Gérard

(57) **Abstract**

A garden scissors (32) comprises a first handle (36) and a second handle (34) respectively having a first blade (40) and a second blade (38) at front ends thereof, wherein the first blade (40) has a positioning slot (54); a torsion spring (48) arranged between the first handle (36) and the first blade (40) with one end thereof fixedly installed in the first handle (36) and another end thereof passing through the positioning slot (54) and the second blade (38) and fixedly installed in the second handle (36); a pin track (62) formed on the second handle (34); a rotary switch device (70) connecting with the second handle (34); a pin block (66) passing through the second handle (36) to connect with the rotary switch device (70) and driven by the rotary switch device (70) to move in the pin track (62); and a screw (82) passing through the second handle (34), the second blade (38), the first blade (40), the torsion spring (48) and the first handle (36) to connect with a nut to form a garden scissors (32).

## Description

The present invention relates to a garden scissors, particularly to a garden scissors having a switch pivotally installed in the joint of a first blade and a second blade and having an opening-adjust device.

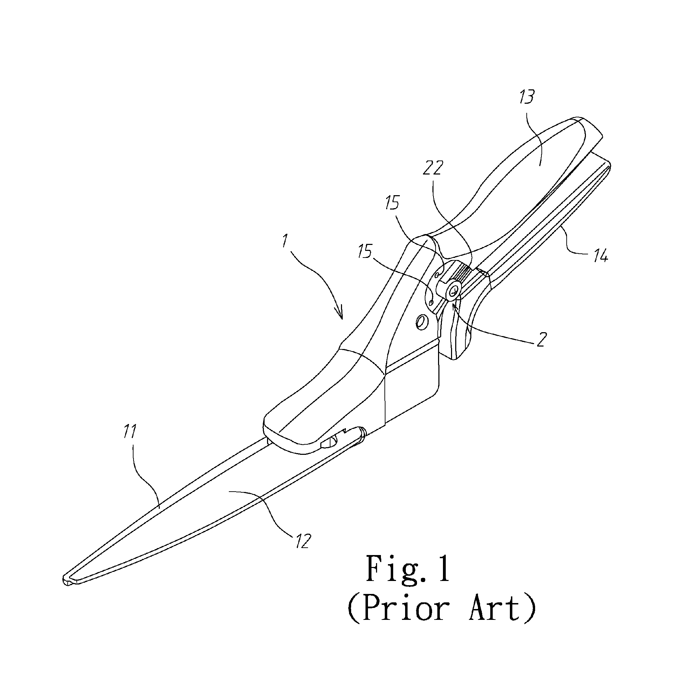

Refer to Fig.1 for a prior art of the present invention. The prior-art garden scissors 1 has an opening-control mechanism. The garden scissors has a body 1, and the body 1 has a static blade 11 and a movable blade 12 at the front end thereof. A static handle 13 extends from the other end of the body 1, and a movable handle 14 is pivotally installed on the static handle 13. The movable handle 14 drives the movable blade 12 to move. Pressing the movable handle 14 actuates the movable blade 12 to move with respect to the static blade 11 and perform cutting.

The body 1 has an opening-control mechanism 2 having an adjust member 21 pivotally coupled to the body 1. One end of the adjust member 21 extends out of the body 1 and links with a shift rod 22, and the shift rod 22 has a protrusion on the side facing the body 1. The body 1 has three positioning holes 15 facing the protrusion of the shift rod 22, whereby the user can operates the shift rod 22 to enable a multi-step positioning of the opening-control mechanism 2.

The present invention proposes an improved garden scissors with respect to the prior-art garden scissors.

The primary objective of the present invention is to provide a garden scissors, wherein a rotary switch device is directly arranged in the joint of a first blade and a second blade.

Another objective of the present invention is to provide a garden scissors having an opening-adjust device to appropriately adjust the opening thereof.

The present invention proposes a garden scissors, which comprises a first handle and a second handle respectively having a first blade and a second blade at front ends thereof, wherein the first blade has a positioning slot; a torsion spring arranged between the first handle and the first blade with one end thereof fixedly installed in the first handle and another end thereof passing through the positioning slot and the second blade and fixedly installed in the second handle; a pin track formed on the second handle; a rotary switch device connecting with the second handle; a pin block passing through the second handle to connect with the rotary switch device and driven by the rotation of the rotary switch device to move in the pin track; and a screw assembling together the second handle, the second blade, the first blade, the torsion spring and the first handle to form a garden scissors. The present invention directly installs the rotary switch device in the joint of the first and second blades, which is distinct from the prior arts. Further, the present invention provides an opening-adjust device, which can appropriately adjust the opening of the blades of the garden scissors.

Below, the embodiments are described in detail in cooperation with the attached drawings to make easily understood the objectives, technical contents, characteristics and accomplishments of the present invention.
Fig.1 is a diagram schematically showing a conventional garden scissors;
Fig.2 is a diagram schematically showing a garden scissors according to the present invention;
Fig.3 is an exploded view schematically showing a garden scissors according to the present invention;
Fig.4 is another exploded view schematically showing a garden scissors according to the present invention;
Fig.5 is a partially enlarged view schematically showing a rotary switch device of a garden scissors according to the present invention;
Fig.6 is a partially enlarged view schematically showing the closure of a garden scissors according to the present invention;
Fig.7 is a diagram schematically showing the closure of a garden scissors according to the present invention;
Fig.8 is a partially enlarged view schematically showing the opening of a garden scissors according to the present invention; and
Fig.9 is a diagram schematically showing the opening of a garden scissors according to the present invention.

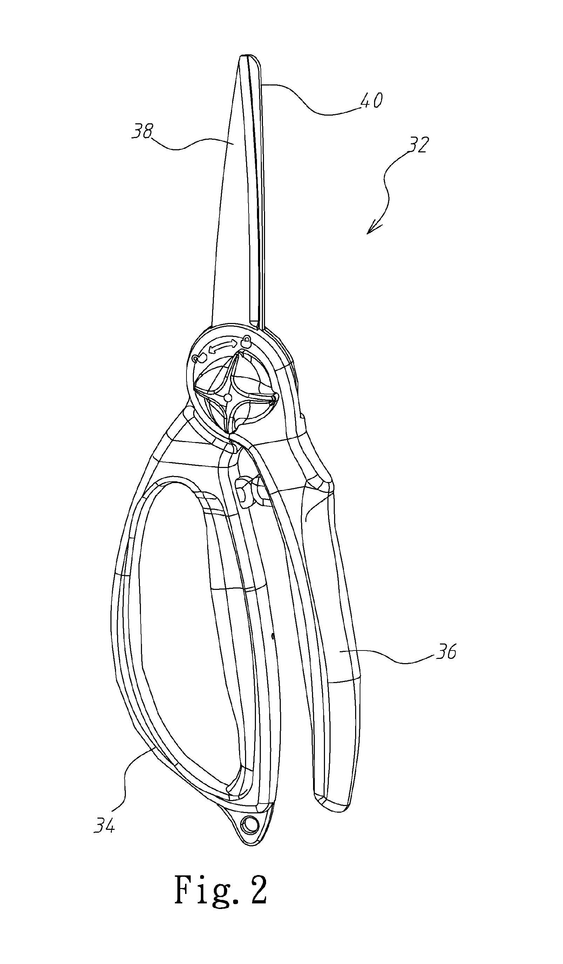

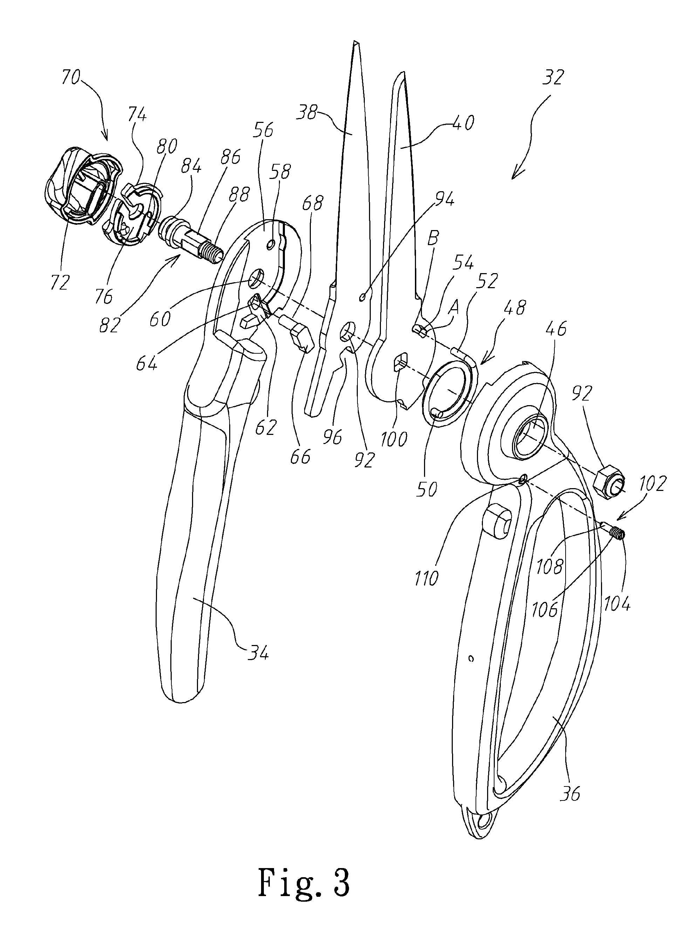

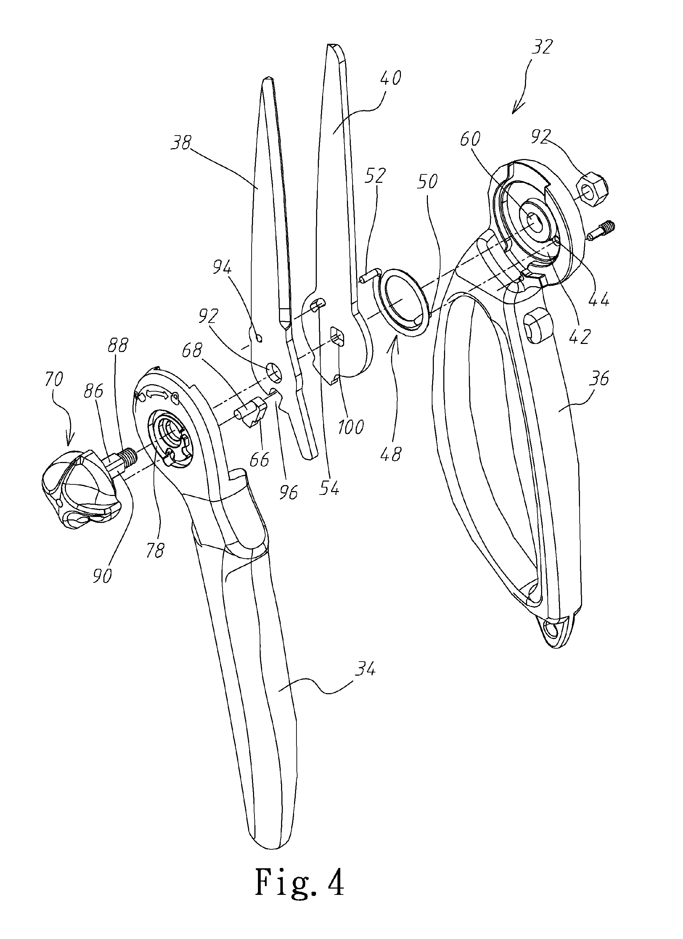

Refer to from Fig.2 to Fig.4 for the detailed description of the present invention. The present invention proposes a garden scissors 32, which comprises a first handle 36, a second handle 34, a pin track 62, a torsion spring 48, a pin block 66, a rotary switch device 70, and a screw 82. The first handle 24 and the second handle 34 respectively have a first blade 40 and a second blade 38.As shown in Fig.3 and Fig.4, the front of the first handle 36 has a first accommodation basin 42 including a first fixing hole 44 and a first through-hole 46.

A first end 50 of the torsion spring 48 is stably installed in the first fixing hole 44. A second end 52 of the torsion spring 48 passes through a positioning slot 54 on the first blade 40 and is buckled by the first blade 40. Then, the lower end of the first blade 40 is joined with the first accommodation basin 42 to form a first semi-finished product 97. The positioning slot 54 includes a first position A and a second position B, which will be demonstrated thereinafter.

The rotary switch device 70 includes a casing 72 and a slide member 74. One side of the slide member 74 is connected to the casing 72, and the other side of the slide member 74 has a first track 76 and a guide slot 80.

The screw 82 includes a second screw head 84, a second non-threaded portion 86 and a second threaded portion 88. One end of the second screw head 84 is connected to the slide member 74 of the rotary switch device 70. The other end of second screw head 84 is connected to one end of the second non-threaded portion 86. The second non-threaded portion 86 has chamfers 90 and has a cuboid-like shape. The other end of second non-threaded portion 86 is connected to one end of the second threaded portion 88. The second threaded portion 88 has a thread.

The front end of the second handle 34 has a second accommodation basin 56 on the other side of a second track 78. The second accommodation basin 56 has a second fixing hole 58, a fourth through-hole 60, and a pin track 62. The pin track 62 further has a through-hole 64.

A cylindrical pin 68 extends from a pin block 66. The pin 68 passes through the through-hole 64 to connect with the guide slot 80 of the slide member 74. The screw 82 passes through the first track 76 of the slide member 74 and the fourth through-hole 60 to connect with the second track 78 on the upper end of the second handle 34. When the user applies force to the casing 72 of the rotary switch device 70, the pin 68 of the pin block 66 moves along the guide slot 80, and the pin block 66 moves along the pin track 62. Therefore, the user can use the rotary switch device 70 to drive the pin block 66 to move along the pin track 62.

The second blade 38 has a third through-hole 92 and a through-hole 94. After passing the fourth through-hole 60 of the second handle 34, the screw 82 further passes through the third through-hole 92. Then, the bottom side of the second blade 38 is accommodated in the second accommodation basin 56 to form a second semi-finished product 98. The second blade 38 further has a notch 96 with a shape similar to the pin block 66 lest the pin block 66 interfere with the second blade 38.

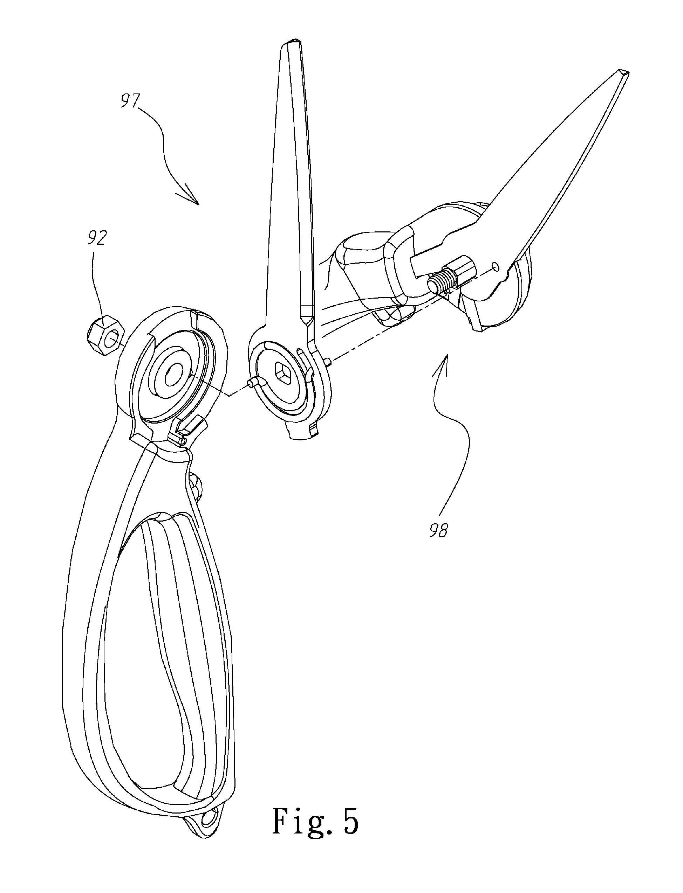

Refer to Fig.5. When the first semi-finished product 97 and the second semi-finished product 98 are assembled together, the screw 82 is aimed at a second through-hole 100 of the first blade 40, the central hole of the torsion spring 48, and the first through-hole 46 of the first handle 36. The second end 52 of the torsion spring 48 is aimed at the through-hole 94 of the second blade 38 and the second fixing hole 58 of the second handle 34. After the screw 82 has passed through the first semi-finished product 97, and after the second end 52 of the torsion spring 48 has been fixed to the second fixing hole 58, a nut 92 is screwed into the second threaded portion 88 of the screw 82 to assemble together the second handle 34, the second blade 38, the first blade 40, the torsion spring 48, and the first handle 36 to form the garden scissors 32.

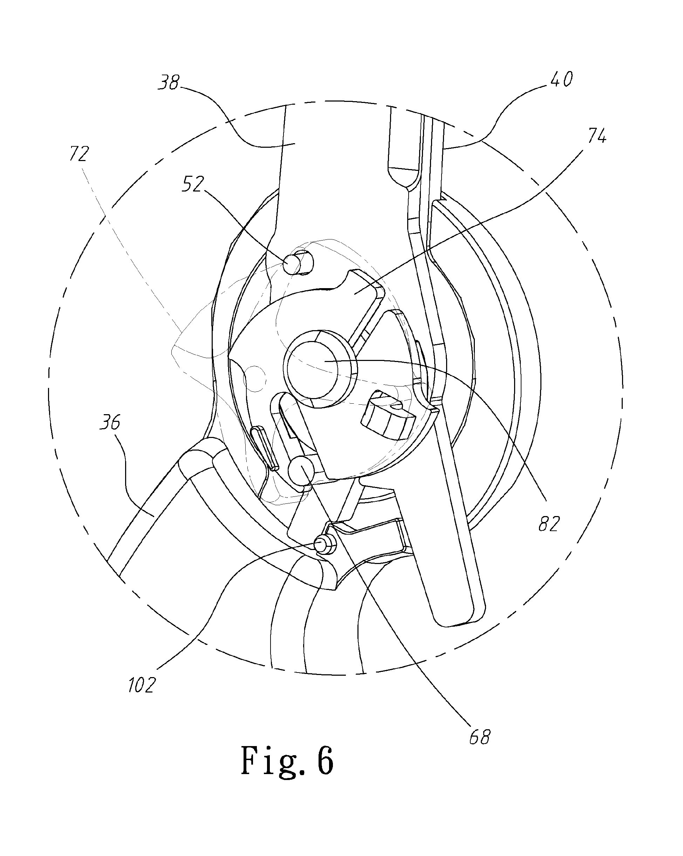

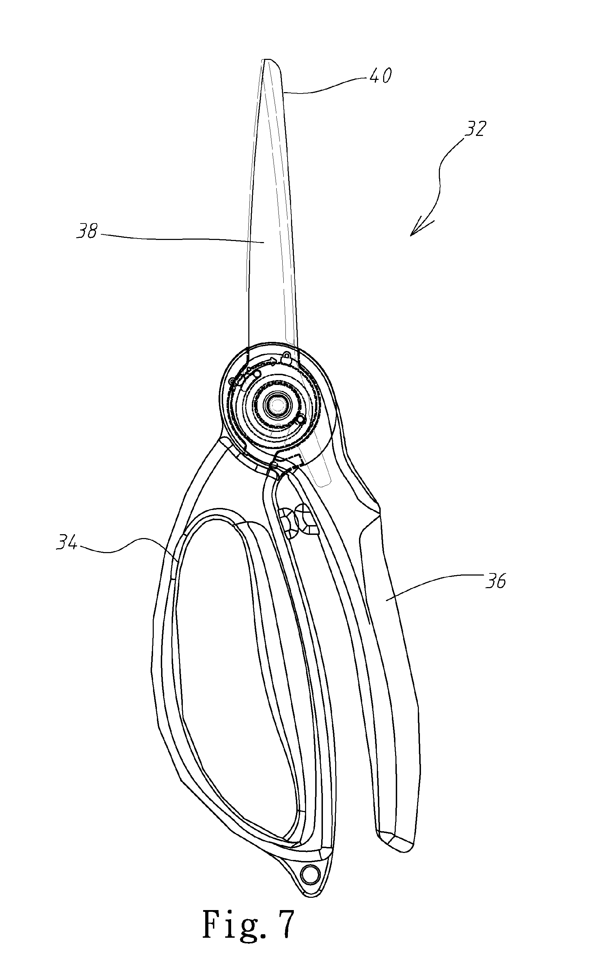

In the garden scissors 32 described above, the rotary switch device 70 is used to control the opening or closure of the first blade 40 and the second blade 38. Refer to Fig.6 and Fig.7. When intending to switch the first blade 40 and the second blade 38 from opening to closure, the user applies a second force to the rotary switch device 70 to shut up the first blade 40 and the second blade 38. Then, the user applies a third force to the rotary switch device 70, and the rotary switch device 70 drives the pin block 66 to move in the pin track 62. At the same time, the pin block 66 integrates with the fisrt handle 36, and the second end 52 of the torsion spring 48 moves from second position A to the first position B the inside the positioning slot 54, whereby the first blade 40 and the second blade 38 are tightly closed.

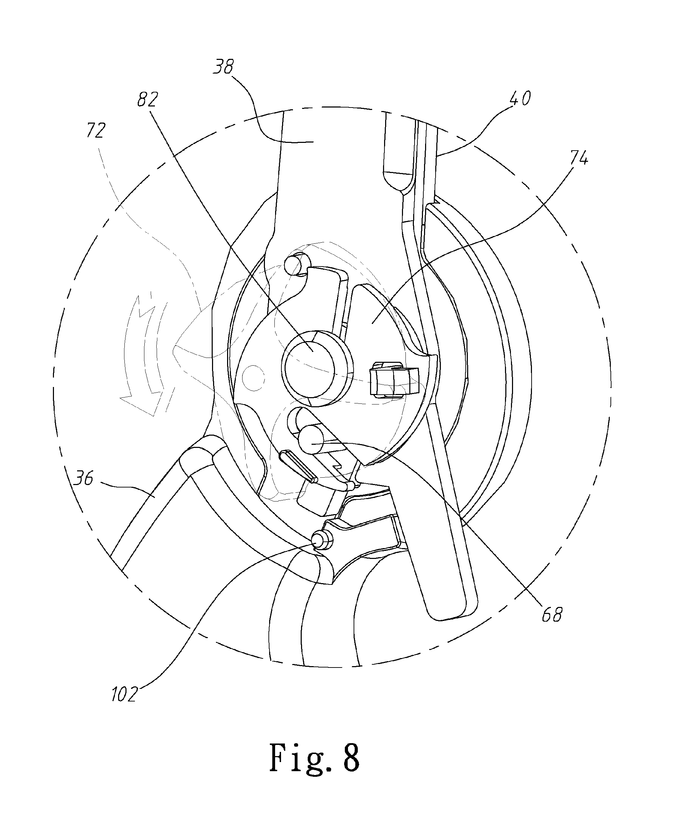

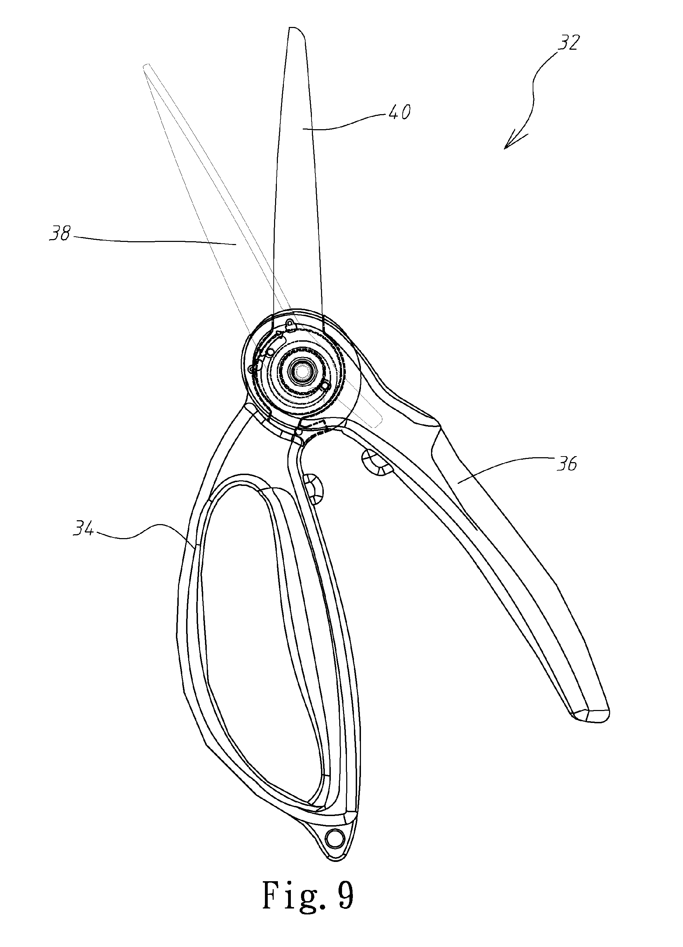

Refer to Fig.8 and Fig.9. When intending to switch the first blade 40 and the second blade 38 from closure to opening, the user applies a first force to the rotary switch device 70 to drive the pin block 66 to move in the pin track 62, whereby the pin block 66 is separated from the fisrt handle 36, and the second end 52 of the torsion spring 48 moves from the the first position B to second position A inside the positioning slot 54. Thus, the first blade 40 and the second blade 38 are opened. It should be noted that the first force and the third force have identical quantity but opposite directions.

The first handle 36 further has an adjust hole 110 and an opening-fine tuning device 102 arranged inside the adjust hole 110. In this embodiment, the opening-fine tuning device 102 includes a first screw head 104, a first threaded portion 106 and a first non-threaded portion 108. One end of the first screw head 104 emerges from the first handle 36. The other end of the screw head 104 connects with one end of the first threaded portion 106. The other end of the first threaded portion 106 connects with one end of the first non-threaded portion 108. The first non-threaded portion 108 connects with the first blade 40. When the elastic deformation of the torsion spring 48 results in that the first blade 40 and the second blade 38 cannot be restored to the optimized closure, the user can use the revealed first screw head 104 to adjust the closure. For example, the user may use the opening-fine tuning device 102 to press the first blade 40 back to the original position lest somebody is hurt by the exposed first blade 40 and second blade 38. The present invention directly installs the rotary switch device in the joint of the first and second blades, which is distinct from the prior arts. The present invention provides an opening-adjust device, which not only adjusts the opening of the blades of the garden scissors but also prevents the user from being hurt by the exposed blades.

The embodiments described above are only to exemplify the present invention but not to limit the scope of the present invention. Any equivalent modification or variation according to the shapes, structures, characteristics or spirit of the present invention is to be also included within the scope of the present invention.

## Claims

1. A garden scissors comprising
a first handle and a second handle respectively having a first blade and a second blade at front ends thereof, wherein said first blade has a positioning slot, and said positioning slot has a first point and a second point;
a torsion spring arranged between said first handle and said first blade with one end thereof fixedly installed in said first handle and another end thereof passing through said positioning slot of said first blade and said second blade and then fixedly installed in said second handle;
a pin track formed on said second handle;
a rotary switch device connecting with said second handle;
a pin block arranged between said second blade and said pin track with one end thereof passing through said second handle to connect with said rotary switch device, and driven by said rotary switch device to move in said pin track when said rotary switch device is rotated;
a screw connecting with said rotary switch device, passing through said second handle, said second blade, said first blade, said torsion spring and said first handle to connect with a nut, whereby said second handle, said second blade, said first blade, said torsion spring and said first handle are assembled together to form a garden scissors,
wherein said rotary switch device is used to control opening or closure of said first blade and said second blade, and
wherein when said first blade and said second blade are intended to be switched from closure to opening, a first force is applied to said rotary switch device to drive said pin block to move in said pin track, whereby said pin block is separated from said second handle, and an end of said torsion spring moves from a second position to a first position inside said positioning slot, and whereby said first blade and said second blade are opened, and
wherein when said first blade and said second blade are intended to be switched from opening to closure, a second force is applied to said rotary switch device to shut up said first blade and said second blade; then, a third force is applied to said rotary switch device, and said rotary switch device drives said pin block to move in said pin track; at the same time, said pin block integrates with said second handle, and said end of said torsion spring moves from said first position to said second position inside said positioning slot, whereby said first blade and said second blade are tightly closed.

2. The garden scissors according to claim 1, wherein said first force and said third force have identical quantity but opposite directions.

3. The garden scissors according to claim 1 further comprising an opening-fine tuning device arranged on said first handle, connected with said first blade, and used to adjust closure of said first blade and said second blade.

4. The garden scissors according to claim 3, wherein said opening-fine tuning device is accommodated in an adjust hole formed on said first handle and includes
a first screw head with one end emerging from said first handle;
a first threaded portion with one end thereof connecting with another end of said screw head; and
a first non-threaded portion connecting to said first blade with one end thereof connecting with another end of said first threaded portion.

5. The garden scissors according to claim 1, wherein said screw is connected to said rotary switch device in an eccentric way.

6. The garden scissors according to claim 1, wherein said rotary switch device has a first track, and said second handle has a second track; said rotary switch device uses said first track to connect with said second track of said second handle.

7. The garden scissors according to claim 6, wherein one end of said pin block passes through said second handle and is stably installed in said first track.

8. The garden scissors according to claim 6, wherein when said first force or said third force is applied to said rotary switch device, one end of said pin block is moved along said first track, and said rotary switch device drives said pin block to move in said pin track.

9. The garden scissors according to claim 1, wherein said screw includes
a second screw head with one end thereof connected to said rotary switch device;
a second non-threaded portion chamfered to have a cuboid-like shape with one end thereof connected to another end of said second screw head; and
a second threaded portion with one end thereof connected to another end of said second non-threaded portion, wherein said second threaded portion has a thread to connect with said nut.

10. the garden scissors according to claim 1, wherein said first handle,
said first blade, said second blade and said second handle respectively have a first through-hole, a second through-hole, a third through-hole and a fourth through-hole; said screw passes through said first through-hole, said second through-hole, said third through-hole, said torsion spring and said fourth through-hole to connect with said nut.
